# FASCICULE DE BREVET EUROPEEN

(11) **EP 0 694 434 B1**
(45) Date de publication et mention de la délivrance du brevet: **24.09.1997**
(21) Numéro de dépôt: 95401718.2
(22) Date de dépôt: 19.07.1995
(51) Int. Cl.: B60N 2/22

(54) **Articulation pour sièges de véhicules**
Gelenkbeschlag für Fahrzeugsitz
Hinge fitting for vehicle seat

(30) Priorité: 22.07.1994 FR 9409109
(43) Date de publication de la demande: 31.01.1996
(73) Titulaire: BERTRAND FAURE EQUIPEMENTS S.A., F-92100 Boulogne (FR)
(72) Inventeur: Baloche, François, F-61100 Flers (FR); Reubeuze, Yann, F-61100 Flers (FR)
(74) Mandataire: Burbaud, Eric

(56) Documents cités:
- EP-A- 0 082 418
- DE-A- 3 319 593
- DE-A- 3 521 730
- GB-A- 2 048 367

## Description

L'invention est relative aux articulations pour sièges de véhicules comprenant un premier flasque solidarisable avec l'ossature du dossier du siège, un second flasque solidarisable avec l'ossature de l'assise de ce siège et définissant avec le premier flasque un boîtier, de préférence rond, une bague dentée intérieurement liée au premier flasque, intérieure au boîtier et admettant pour axe l'axe horizontal X de l'articulation, un organe de commande accessible de l'usager du siège, et un mécanisme intérieur au boîtier, commandable par ledit organe et coopérant avec la denture de la bague pour transformer les rotations dudit organe en déplacements angulaires du premier flasque et donc du dossier du siège ou en autorisations et interdictions de tels déplacements angulaires.

Le mécanisme en question peut constituer :
- dans le premier cas, un train démultiplicateur et irréversible, comprenant notamment un satellite excentré double, interposé entre l'organe de commande et la bague dentée,
- dans le second cas, un dispositif de verrouillage mettant en oeuvre une came rotative solidaire de l'organe de commande, au moins un grain denté extérieurement propre à coopérer avec la denture de la bague et monté de façon à pouvoir coulisser radialement dans un guide évidé dans le second flasque sous la commande de la came, et un ressort sollicitant angulairement en permanence cette came vers sa position correspondant à la mise en prise du grain dans la denture de la bague, c'est-à-dire au verrouillage de l'articulation.

De telles articulations connues -pour lesquelles la bague dentée est solidarisée avec le premier flasque et constitue même généralement une seule pièce avec ce flasque- permettent à l'usager du siège de régler facilement l'inclinaison du dossier de ce siège autour de l'axe X, lorsqu'il est assis sur ledit siège.

L'invention vise plus particulièrement, parmi ces articulations, celles qui doivent pouvoir être momentanément débloquées pour rendre possible un basculement rapide du dossier vers l'avant en vue de rendre possible l'accès à une place arrière du véhicule considéré, lorsque celui ne comprend qu'une porte de chaque côté.

Elle a pour but, en particulier, de rendre possible, après un tel déblocage angulaire, un retour automatique du dossier en la position angulaire préréglée qu'il occupait avant ledit déblocage, et ce quelle que soit cette position angulaire, et à l'aide d'une articulation particulièrement robuste et peu encombrante se présentant globalement, de préférence, sous la forme d'une simple galette ronde, mis à part bien entendu ses organes de commande.

A cet effet, une articulation du genre en question selon l'invention comprend encore les différents éléments ci-dessus indiqués et elle est essentiellement caractérisée en ce que la bague dentée est montée libre en rotation par rapport au premier flasque et en ce que ladite articulation comprend en outre, d'une part, un second mécanisme intérieur au boîtier, propre à accoupler de façon réversible la bague dentée et le premier flasque en ce qui concerne leurs déplacements angulaires autour de l'axe X, mécanisme comportant deux butées solidarisées angulairement respectivement avec la bague dentée et avec le premier flasque et propres, par leur application angulaire mutuelle pour la position préréglée occupée par le premier flasque au début de chaque désaccouplement, à mémoriser cette position et d'autre part, un second organe de commande de ce second mécanisme facilement accessible de l'arrière du dossier.

Dans des modes de réalisation préférés, on a recours en outre à l'une et/ou à l'autre des dispositions suivantes :
- le second mécanisme comprend une plaquette transversale solidaire de la bague dentée et évidée par une fente comprenant un tronçon radial raccordé à son extrémité la plus proche de l'axe X à un tronçon en arc de cercle centré sur l'axe X, un grain denté extérieurement monté de façon à pouvoir coulisser dans un guide radial compris par le premier flasque, ledit grain comprenant un téton logé aux fins de guidage dans la fente de la plaquette et étant propre à coopérer avec une seconde denture intérieure comprise par la bague dentée pour sa position radialement la plus éloignée de l'axe X, une came rotative de commande des déplacements du grain liée au second organe de commande et un ressort sollicitant constamment cette came vers sa position angulaire pour laquelle elle sollicite le grain denté vers sa position la plus éloignée de l'axe X,
- le nombre des fentes évidées dans la plaquette transversale est égal à 3, ces fentes sont identiques et décalées angulairement de 120° entre elles autour de l'axe X et le second mécanisme comprend trois grains dentés dont les tétons sont logés respectivement dans les trois fentes,
- le tronçon radial de chaque fente ci-dessus est raccordé au tronçon en arc de cercle de cette fente en un point intermédiaire de ce dernier tronçon,
- la plaquette transversale est disposée sensiblement au milieu de l'épaisseur axiale du boîtier formé par les deux flasques, entre les deux mécanismes destinés respectivement à assurer le réglage de l'inclinaison du dossier et à rendre possible le basculement de ce dossier vers l'avant,
- l'organe de commande du second mécanisme est une manette disposée dans la région supérieure du dossier du siège et reliée à une poulie solidaire de la came correspondante par l'intermédiaire d'un câble inextensible logé sous gaine.

L'invention comprend, mises à part ces dispositions principales, certaines autres dispositions qui s'utilisent de préférence en même temps et dont il sera plus explicitement question ci-après.

Dans ce qui suit, l'on va décrire quelques modes de réalisation préférés de l'invention en se référant aux dessins ci-annexés d'une manière bien entendu non limitative.

Les figures 1 et 2, de ces dessins, montrent très schématiquement un siège de véhicule équipé d'une articulation selon l'invention, respectivement en vue de côté et en vue de dos.

La figure 3 montre en coupe axiale un premier mode de réalisation d'une telle articulation en un état verrouillé de repos.

Les figures 4, 5 et 6 montrent la même articulation en coupes transversales selon respectivement les plans IV-IV, V-V et VI-VI de la figure 3.

La figure 7 est une coupe transversale selon le même plan que la figure 4 mais pour une position déverrouillée de l'articulation correspondant au réglage fin d'inclinaison du dossier.

Les figures 8 et 9 sont des coupes transversales selon respectivement les mêmes plans que les figures 5 et 6, mais pour une position désaccouplée de l'articulation rendant possible le basculement du dossier vers l'avant.

Les figures 10 et 11 sont des coupes transversales semblables à celles des figures 8 et 9, mais qui correspondent à la position du dossier basculée vers l'avant.

La figure 12 montre en coupe axiale un second mode de réalisation d'articulation conforme à l'invention en un état normal de repos.

Les figures 13 et 14 sont des coupes transversales de la figure 12 selon respectivement les plans XIII-XIII et XIV-XIV.

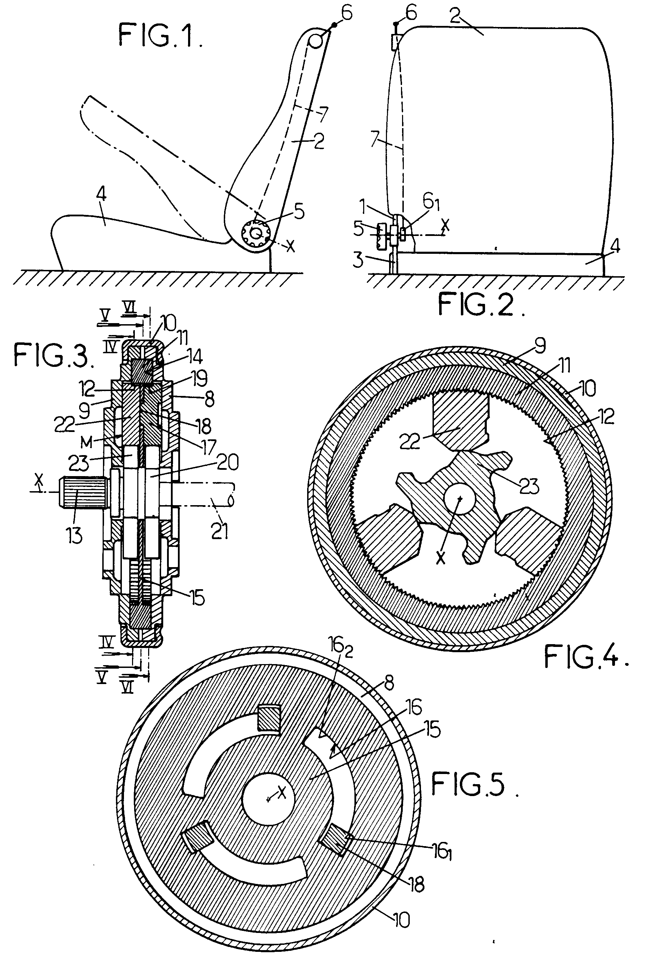

Dans chaque cas, l'articulation considérée est destinée à rendre possible le réglage de l'inclinaison de l'ossature 1 d'un dossier 2 de siège de véhicule (figures 1 et 2) par rapport à l'ossature 3 de l'assise 4 de ce véhicule, autour d'un axe horizontal fixe X, ce réglage étant obtenu par commande d'un organe facilement accessible de l'usager assis sur le siège, tel qu'une poignée rotative 5.

Le réglage en question, destiné à assurer le confort de l'usager assis sur le siège, est relativement fin et s'étend sur une plage angulaire limitée, par exemple de l'ordre de 30°.

On désire en outre ici que le dossier 2 puisse être facilement et rapidement rabattu sur l'assise 4, comme indiqué en traits mixtes sur la figure 1, pour faciliter l'accès aux places arrière du véhicule, dans le cas où ce véhicule ne comprend qu'une porte latérale de chaque côté.

A cet effet, l'articulation doit pouvoir être débloquée à l'aide d'un second organe de commande tel que par exemple une manette 6 disposée au sommet du dossier 2, manette facilement accessible de l'arrière du dossier et reliée à l'articulation par un câble inextensible sous gaine 7.

Il est bien entendu désirable que, après le rabattement indiqué, le dossier puisse être replacé automatiquement en la position préréglée qu'il occupait juste avant ce rabattement, et donc que l'articulation conserve en mémoire, lors de chaque rabattement, la position préréglée correspondante.

Il existe déjà de telles articulations à mémoire.

L'invention a pour but, surtout, de proposer pour une telle articulation à mémoire une construction particulièrement robuste et compacte, se présentant de préférence sous la forme d'une galette ronde.

A cet effet, on fait comprendre d'une façon connue en soi à ladite articulation :
- un premier flasque circulaire 8 d'axe X, solidarisable de toute manière désirable, notamment à l'aide de goujons (non représentés), à l'ossature 1 du dossier,
- un second flasque circulaire 9 d'axe X semblablement solidarisable à l'ossature 3 de l'assise et propre à former avec le premier flasque 8, et avec un profilé métallique annulaire 10 en U coiffant l'ensemble des deux flasques et solidaire de l'un d'eux, un boîtier en forme de galette,
- une bague 11 d'axe X présentant une denture intérieure 12 logée dans ce boîtier, au voisinage de sa périphérie, de façon à être libre en rotation autour de l'axe X par rapport au flasque 9,
- un arbre rotatif 13 d'axe X traversant le second flasque et solidarisé avec la poignée 5,
- et un mécanisme M interposé entre l'arbre 13 et la bague dentée 11, mécanisme propre à transformer les rotations dudit arbre en déplacements angulaires du flasque 8 lié au dossier ou en autorisations et interdictions de tels déplacements angulaires.

En d'autres termes le mécanisme M, qui est commandable par les rotations de la poignée 5, permet les réglages fins de la position angulaire du dossier.

Dans les articulations connues du genre ci-dessus, ladite bague dentée 11 est solidarisée angulairement en permanence avec le flasque 8 lié au dossier, formant même généralement une seule pièce avec ce flasque, de sorte que les réglages en question sont précisément les réglages de "confort" de l'inclinaison du dossier.

Dans le cas présent, et comme il sera précisé plus loin, la solidarisation angulaire entre la bague dentée 11 et le flasque 8 lié au dossier n'est pas permanente.

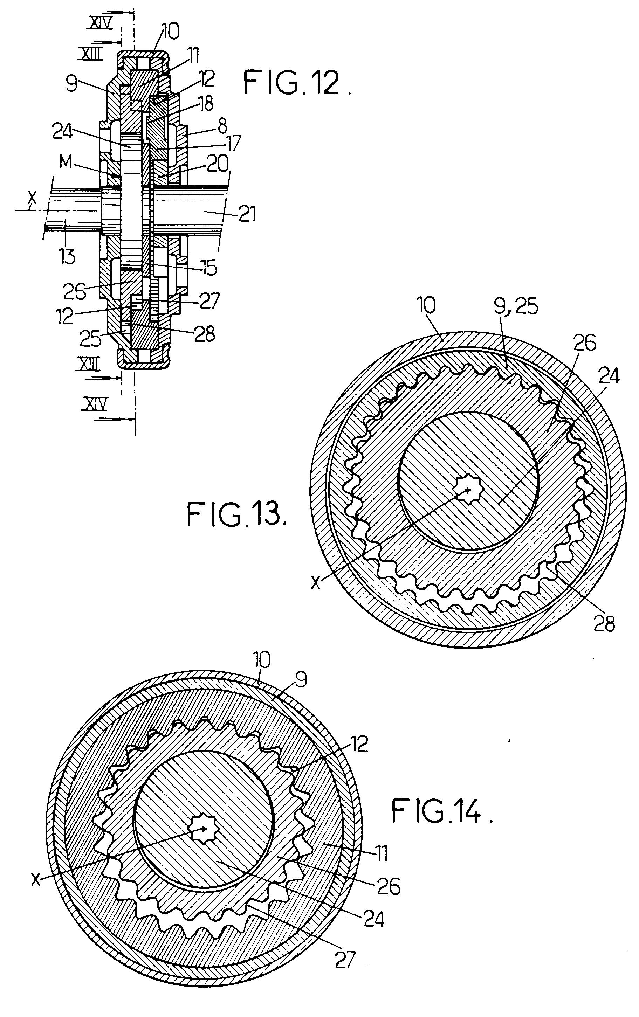

Mais la constitution même du mécanisme M interposé entre l'arbre rotatif 13 et la bague dentée 11 est d'un type connu en soi et deux modes de réalisation d'un tel mécanisme M seront décrits plus loin en se référant respectivement aux figures 3, 4 et 7 et aux figures 12 à 14.

L'invention concerne essentiellement les moyens qui sont ici prévus, indépendamment du mécanisme M, pour débloquer momentanément l'articulation de façon à rendre possibles les basculements rapides du dossier 2 vers l'avant, puis ses retours en exactement sa position angulaire préréglée.

A cet effet, la bague dentée 11 est ici montée libre en rotation par rapport au flasque 8, étant en particulier montée de façon à pouvoir coulisser angulairement dans une portée annulaire complémentaire 14 dudit flasque 8, et des moyens sont prévus pour accoupler ou désaccoupler à volonté entre eux la bague 11 et le flasque 8 vis-à-vis de leurs rotations autour de l'axe X.

Ces moyens d'accouplement et de désaccouplement comprennent :
- une plaquette transversale 15 solidaire de la bague dentée 11 et évidée par au moins une fente 16 comprenant un tronçon radial 16₁ raccordé à son extrémité la plus proche de l'axe X à un tronçon 16₂ s'étendant selon un arc de cercle centré sur l'axe X,
- un grain 17 denté extérieurement monté de façon à pouvoir coulisser dans un guide radial (non représenté) compris par le flasque 8, ledit grain comprenant un téton 18 logé aux fins de guidage dans la fente 16 et étant propre à coopérer avec une seconde denture intérieure 19 d'axe X comprise par la bague 11, pour la position de ce grain radialement la plus éloignée de l'axe X,
- une came rotative 20 de commande des déplacements radiaux du grain 17, came solidaire d'un arbre rotatif 21 faisant partie de l'organe de commande 6 ou angulairement lié à ce dernier,
- et un ressort R (non représenté) sollicitant constamment la came 20 vers sa position angulaire pour laquelle elle sollicite le grain denté 17 vers sa position la plus éloignée de l'axe X.

Dans les modes de réalisation préférés illustrés, le nombre des fentes 16 évidées dans la plaquette 15 est égal à 3, ces fentes sont identiques et décalées angulairement de 120° entre elles autour de l'axe X et il est prévu trois grains dentés 17 dont les tétons 18 sont logés respectivement dans les trois fentes 16.

Le fonctionnement de l'ensemble est le suivant.

Au repos, c'est-à-dire tant qu'aucun des deux organes de commande 5 et 6 n'est sollicité,
- la bague dentée 11 est immobilisée en rotation,
- les grains 17 sont disposés en leurs positions radiales les plus éloignées de l'axe et sont en prise avec la denture 19 de la bague 11, et leurs tétons 18 sont eux-mêmes logés dans les tronçons radiaux 16₁ des fentes 16, ce qui les rend angulairement solidaires de la plaquette 15 et donc de la bague dentée 11 alors fixe.

Comme par ailleurs les grains 17 sont, par l'intermédiaire de leurs guides, angulairement solidaires du flasque 8 et donc du dossier 2, ce dernier est bloqué angulairement.

Cette position angulaire du dossier, supposée réglée, sera appelée ci-après sa position "préréglée".

Si l'usager actionne alors l'organe de commande 6, cet actionnement fait pivoter la came 20 autour de l'axe X, à l'encontre de l'action de rappel du ressort R, ce qui libère radialement les grains dentés 17.

Ces grains peuvent être sollicités radialement en direction de l'axe à l'aide d'un ressort auxiliaire (non représenté) qui peut être par exemple constitué par un fil métallique s'étendant selon un cercle discontinu centré sur l'axe X, entourant les trois grains le long de portées, de ces derniers, décalées axialement par rapport à leurs dentures.

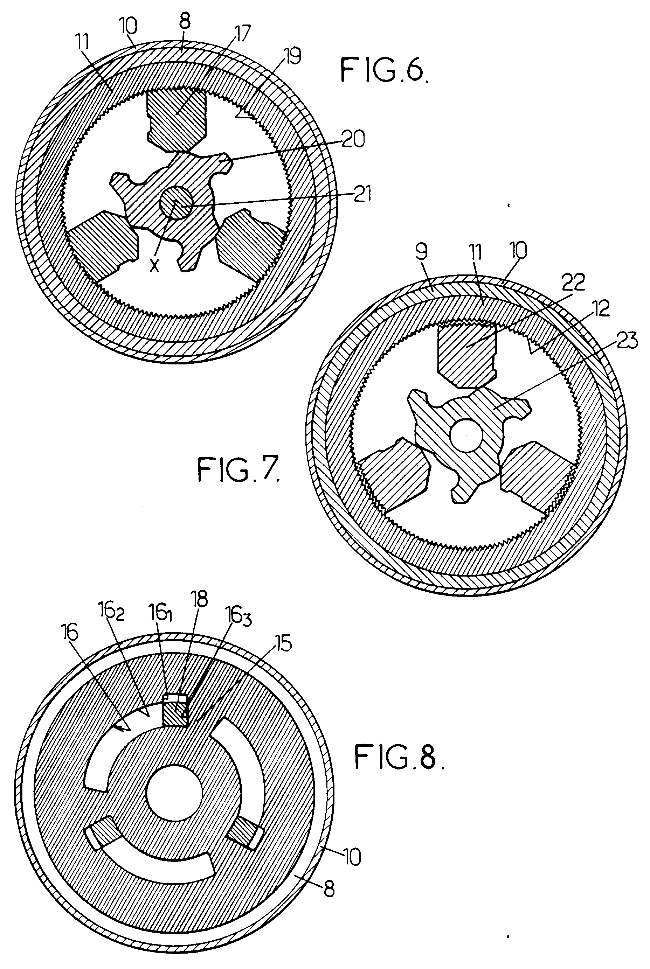

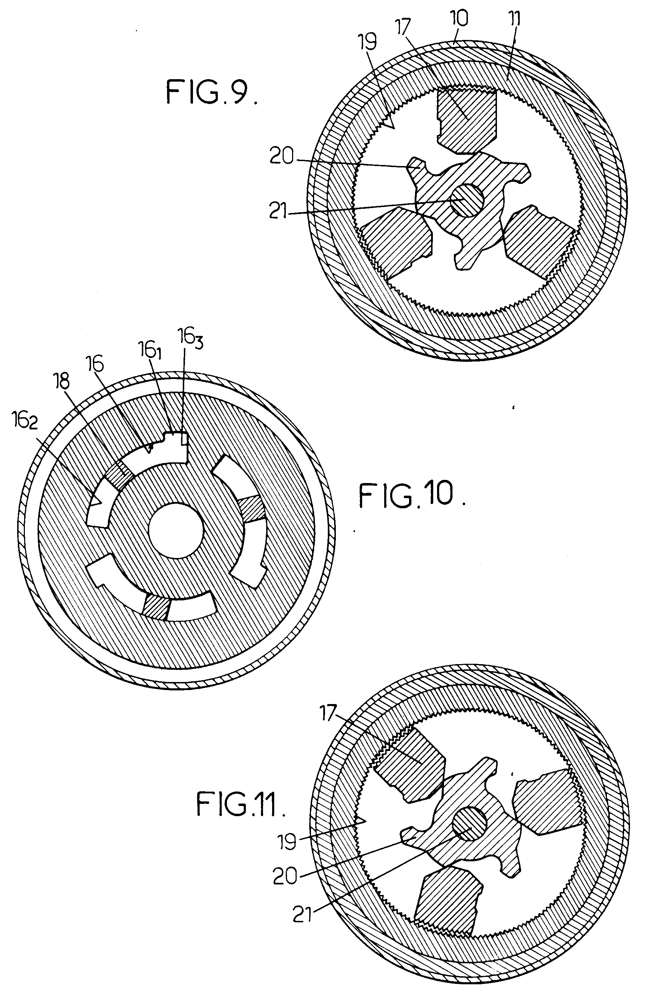

Les grains 17 se dégagent alors de la denture 19, ainsi que visible sur la figure 9 et en même temps leurs tétons 18 décrivent les tronçons 16₁ des fentes 16 pour parvenir aux points de raccordement de ces fentes avec leurs tronçons 16₂ en arc de cercle, ainsi que visible sur la figure 8.

Il est alors possible de déplacer angulairement l'ensemble constitué par le flasque 8, les grains 17 contenus dans les guides radiaux de ce flasque et la came 20 : aucun obstacle en effet ne s'oppose plus aux déplacements des tétons 18 par rapport à la plaquette 15, puisque ces tétons peuvent se déplacer dans les tronçons 16₂ en arc de cercle des fentes 16.

Le rabattement du dossier 2 est alors possible et l'on voit sur les figures 9 et 10 les positions respectives qui sont occupées par la came 20 et par les tétons 18 pour une position rabattue du dossier.

Bien entendu, lors de ce rabattement, la plaquette 15 demeure en place et il en est de même des tronçons radiaux 16₁ des fentes 16 de cette plaquette, lesquelles matérialisent la position préréglée du dossier.

Il est à noter également que, dès l'engagement des tétons 8 dans les tronçons en arc de cercle 16₂ des fentes 16 correspondantes, ces tétons ne peuvent plus se déplacer radialement vers l'extérieur : on peut alors lâcher l'organe de commande 6 sans risque d'un retour prématuré des grains 17 vers leur position radiale d'engrènement.

Lors du retour du dossier vers l'arrière, après son rabattement, les tétons 18 viennent à nouveau buter en fin de course contre les bords extrêmes 16₃ des tronçons 16₁ : le dossier 2 a alors retrouvé sa position préréglée et le retour élastique final de la came 20 en sa position angulaire d'origine a pour effet à nouveau de repousser radialement les grains 17 vers leurs positions radiales les plus éloignées de l'axe X pour lesquelles ils sont à nouveau en prise avec la denture 19, les coulissements radiaux correspondants étant rendus possibles du fait que les tétons 18 se trouvent alors en regard des tronçons radiaux 16₁ des fentes 16.

L'articulation est donc à nouveau bloquée en sa position préréglée.

Il est à noter que, lors des basculements du dossier, la came 20 et donc l'arbre 21 ainsi qu'une partie de l'organe de commande 6 sont entraînés en rotation avec ce dossier autour de l'axe X : la présence du câble souple 7 entre la manette ou pièce d'extrémité, dudit organe, qui est directement actionnable par l'usager et une poulie ou galet 6₁ solidaire de l'arbre 21 rend possible la manifestation de ces rotations sans que pour autant elles se traduisent par des déplacements réels de ladite manette.

On peut noter également ce qui suit :
- la plaquette transversale 15, solidaire de la bague 11, est disposée au milieu de la dimension axiale du boîtier, et forme ainsi une sorte de cloison de séparation entre les deux mécanismes affectés respectivement au réglage fin ou "de confort" de l'inclinaison du dossier et au rabattement de ce dossier ; cette plaquette peut former une seule pièce, notamment moulée, avec la bague 11, ainsi que supposé sur les dessins, mais elle pourrait également être raccordée angulairement à cette bague par mise en prise d'une denture prévue à sa périphérie avec une denture complémentaire prévue sur la face intérieure de la bague, cette dernière denture prolongeant axialement, de préférence, la denture 12 et/ou la denture 19 déjà comprises par ladite bague 11,
- les deux arbres 13 et 21 d'axe X affectés respectivement aux commandes du mécanisme de réglage fin et à celles du mécanisme de "rabattement" peuvent s'étendre axialement des deux côtés du boîtier comme représenté sur les dessins, mais ils pourraient également être concentriques, l'un d'eux, de forme tubulaire, entourant alors l'autre.

On va maintenant décrire, en se référant successivement aux figures 3, 4 et 7 et aux figures 12, 13 et 14, deux modes de réalisation connus en soi du mécanisme M qui assure le réglage fin ou de confort de l'inclinaison du dossier.

Chacun de ces mécanismes est interposé entre l'arbre rotatif 13 et la denture intérieure 12 de la bague 11, bague qui, au lieu d'être solidaire en permanence du flasque de dossier 8, comme dans les modes de réalisation connus, peut être ici désaccouplée de ce flasque ainsi qu'il a été indiqué ci-dessus.

Le mécanisme selon le premier mode de réalisation rend possible le verrouillage et le déverrouillage de l'articulation pour une multitude d'inclinaisons différentes du dossier.

Ce mécanisme comprend :
- au moins un grain 22 denté extérieurement propre à coulisser dans un guide radial (non représenté) compris par le flasque d'assise 9 et à coopérer, pour sa position la plus éloignée de l'axe X, avec la denture 12,
- une came rotative 23 solidaire de l'arbre 13 et propre à commander les coulissements radiaux des grains 22,
- et un ressort (non représenté) sollicitant en permanence la came 23 dans le sens angulaire pour lequel elle repousse les grains 22 vers l'extérieur.

Le fonctionnement de ce mécanisme est le suivant :
- au repos, les grains dentés 22 sont en prise avec la denture 12 (figure 4), ce qui bloque l'articulation,
- lorsqu'au contraire on tourne la poignée 5 à l'encontre de l'effort de rappel du ressort antagoniste, on libère radialement les grains 22 qui, avec l'aide éventuelle d'un ressort du genre de celui décrit ci-dessus pour solliciter radialement vers l'axe les grains 17, s'écartent de la denture 12 ainsi que visible sur la figure 7.

Cette denture 12, et donc la bague dentée 11 et l'ossature 8 du dossier qui en est alors solidaire, peuvent alors être réglées en inclinaison, notamment par simple appui du dos de l'usager du siège sur ce dossier, à l'encontre de l'effort de rappel antagoniste d'un ressort approprié.

Dès que la position inclinée de confort est obtenue, il suffit de lâcher la poignée 5 pour que le retour de la came 23 en sa position angulaire initiale remette à nouveau en prise les grains 22 avec la couronne 12, ce qui assure à nouveau le blocage de l'articulation en la position réglée de confort obtenue.

Le mécanisme du second mode de réalisation est un train démultiplicateur irréversible comprenant :
- un disque circulaire excentré 24 calé sur l'arbre 13,
- une denture circulaire intérieure 25 d'axe X solidaire du flasque 9, disposée à la périphérie de celui-ci à l'intérieur du boîtier,
- et un satellite 26 à double denture extérieure monté fou sur le disque 24 et dont les petite et grande dentures engrènent respectivement avec la denture intérieure 12 de la bague 11 et avec la denture intérieure 25 du flasque 9.

Le fonctionnement de ce dernier mécanisme est le suivant : tout déplacement angulaire de la poignée 5 et donc de l'arbre 13 se traduit par une rotation de l'excentrique 24 ; cette rotation génère un déplacement angulaire de beaucoup plus petite amplitude de la denture intérieure 12 de la bague 11, et donc du flasque 8 et du dossier 2 qui en sont solidaires.

En suite de quoi et quel que soit le mode de réalisation adopté, on dispose finalement d'une articulation de siège à "mémoire" dont la constitution et le fonctionnement résultent suffisamment de ce qui précède.

Cette articulation présente de nombreux avantages par rapport à ceux des articulations à mémoire antérieurement connues, notamment en ce qu'elle est particulièrement robuste et se présente sous la forme d'une galette, de préférence ronde, de très faible encombrement.

Comme il va de soi, et comme il résulte d'ailleurs déjà de ce qui précède, l'invention ne se limite nullement à ceux de ses modes d'application et de réalisation qui ont été plus spécialement envisagés ; elle en embrasse, au contraire, toutes les variantes, notamment :
- celles où la denture intérieure 19 de la bague 11 serait discontinue, c'est-à-dire constituée par des secteurs dentés disposés chacun radialement en regard d'un grain denté 17 pour la position angulaire, de ce grain, correspondant au début ou à la fin de chaque "désaccouplement", chaque ensemble grain denté 17-denture 19 pouvant même, à la limite, être remplacé par l'ensemble d'un doigt radial et d'une encoche radiale complémentaire,
- celles où les rabattements angulaires du dossier à partir de sa position d'inclinaison préréglée pourraient être exécutés à volonté de part et d'autre de cette position, c'est-à-dire non seulement vers l'avant pour libérer l'accès aux places arrière du véhicule, mais également vers l'arrière de façon à atteindre une position de couchette, le tronçon radial 16₁ de chaque fente 16 étant alors raccordé à son extrémité intérieure, au tronçon 16₂ en arc de cercle de ladite fente, non pas au niveau d'une des extrémités de ce dernier tronçon, mais au niveau d'un point intermédiaire de celui-ci, le nombre total des fentes étant avantageusement égal à deux dans ce dernier cas.

## Revendications

1. Articulation pour siège de véhicule comprenant un premier flasque (8) solidarisable avec l'ossature (1) du dossier (2) du siège, un second flasque (9) solidarisable avec l'ossature (3) de l'assise (4) de ce siège et définissant avec le premier flasque un boîtier, une bague dentée intérieurement (11) liée au premier flasque, intérieure au boîtier et admettant pour axe l'axe horizontal (X) de l'articulation, un organe de commande (5) accessible de l'usager du siège, et un mécanisme (M) intérieur au boîtier, commandable par ledit organe et coopérant avec la denture (12) de la bague pour transformer les rotations dudit organe en déplacements angulaires du premier flasque et donc du dossier du siège ou en autorisations et interdictions de tels déplacements angulaires, caractérisée en ce que la bague dentée (11) est montée libre en rotation par rapport au premier flasque (8) et en ce que ladite articulation comprend en outre, d'une part, un second mécanisme intérieur au boîtier, propre à accoupler de façon réversible la bague dentée (11) et le premier flasque (8) en ce qui concerne leurs déplacements angulaires autour de l'axe (X), mécanisme comportant deux butées (16₃, 18) solidarisées angulairement respectivement avec la bague dentée (11) et avec le premier flasque (8) et propres, par leur application angulaire mutuelle pour la position préréglée occupée par le premier flasque au début de chaque désaccouplement, à mémoriser cette position et d'autre part, un second organe (6) de commande de ce second mécanisme facilement accessible de l'arrière du dossier.

2. Articulation selon la revendication 1, caractérisée en ce que le second mécanisme comprend une plaquette transversale (15) solidaire de la bague dentée (11) et évidée par une fente (16) comprenant un tronçon radial (16₁) raccordé à son extrémité la plus proche de l'axe (X) à un tronçon en arc de cercle (16₂) centré sur l'axe (X), un grain denté extérieurement (17) monté de façon à pouvoir coulisser dans un guide radial compris par le premier flasque (8), ledit grain comprenant un téton (18) logé aux fins de guidage dans la fente (16) de la plaquette et étant propre à coopérer avec une seconde denture intérieure (19) comprise par la bague dentée (11) pour sa position radialement la plus éloignée de l'axe (X), une came rotative (20) de commande des déplacements du grain (17) liée au second organe de commande (6) et un ressort sollicitant constamment cette came vers sa position angulaire pour laquelle elle sollicite le grain denté vers sa position la plus éloignée de l'axe (X).

3. Articulation selon la revendication 2, caractérisée en ce que le nombre des fentes (16) évidées dans la plaquette transversale (15) est égal à 3, ces fentes étant identiques et décalées angulairement de 120° entre elles autour de l'axe (X) et en ce que le second mécanisme comprend trois grains dentés (17) dont les tétons (18) sont logés respectivement dans les trois fentes (16).

4. Articulation selon la revendication 2, caractérisée en ce que le tronçon radial (16₁) de la fente (16) est raccordé au tronçon en arc de cercle (16₂) de cette fente en un point intermédiaire de ce dernier tronçon.

5. Articulation selon l'une quelconque des précédentes revendications, caractérisée en ce que la plaquette transversale (15) est disposée sensiblement au milieu de l'épaisseur axiale du boîtier formé par les deux flasques (8,9), entre les deux mécanismes destinés respectivement à assurer le réglage de l'inclinaison du dossier (2) et à rendre possible le basculement de ce dossier vers l'avant.

6. Articulation selon l'une quelconque des précédentes revendications, caractérisée en ce que le boîtier se présente sous la forme d'une galette ronde.

7. Articulation selon l'une quelconque des précédentes revendications, caractérisée en ce que l'organe de commande (6) du second mécanisme est une manette disposée dans la région supérieure du dossier (2) du siège et reliée à une poulie (6₁) solidaire de la came correspondante (20) par l'intermédiaire d'un câble inextensible logé sous gaine (7).

## Claims

1. A vehicle seat hinge comprising a first cheek plate (8) suitable for fixing to the framework (1) of the seat back (2), a second cheek plate (9) suitable for fixing to the framework (3) of the seat proper (4) and co-operating with the first cheek plate to define a housing, a ring (11) having an inside set of teeth and secured to the first cheek plate inside the housing and having an axis that coincides with the horizontal axis (X)of the hinge, a control member (5) accessible to the user of the seat, and a mechanism (M) inside the housing, controllable by said member, and co-operating with the set of teeth (12) of the ring to transform rotation of said member into angular displacement of the first cheek plate and thus of the seat back, or into commands enabling and disabling such angular displacements, the hinge being characterized in that the toothed ring (11) is mounted free rotate relative to the first cheek plate (8), and in that said hinge further includes, firstly a second mechanism inside the housing suitable for coupling the toothed ring (11) and the first cheek plate (8) in reversible manner with respect to their angular displacements about the axis (X), which mechanism includes two abutments (16₃, 18) angularly fixed relative to the toothed ring (11) and to the first cheek plate (8) respectively, and suitable for memorizing said position by mutual angular engagement in the preadjusted position occupied by the first cheek plate at the beginning of each uncoupling, and secondly a second control member (6) for said second mechanism and easily accessible from behind the seat back.

2. A hinge according to claim 1, characterized in that the second mechanism comprises a transverse plate (15) secured to the toothed ring (11) and recessed by a slot (16) having a radial length (16₁) connected at its radially innermost end to a circularly arcuate length (16₂) centered on the axis (X), a slug (17) having external teeth and slidably mounted in a radial guide included in the first cheek plate (8), said slug including a stud (18) received for guidance purposes in the slot (16) of the plate, and being suitable in its radially outermost position for co-operating with a second set (19) of inside teeth carried by the toothed ring (11), a rotary cam (20) for controlling displacements of the slug (17) being linked to the second control member (6), and a spring constantly urging said cam towards its angular position in which it urges the toothed slug towards its radially outermost position.

3. A hinge according to claim 2, characterized in that the number of slots (16) recessed in the transverse plate (15) is equal to 3, said slots being identical and mutually offset by angles of 120° about the axis (X), and in that the second mechanism comprises three toothed slugs (17) whose studs (18) are received in the three slots (16) respectively.

4. A hinge according to claim 2, characterized in that the radial length (16₁) of the slot (16) is connected to the circularly arcuate length (16₂) of said slot at an intermediate point therealong.

5. A hinge according to any one of the preceding claims, characterized in that the transverse plate (15) is disposed substantially in the middle of the axial thickness of the housing formed by the two cheek plates (8, 9), between the two mechanisms respectively for adjusting the inclination of the back (2) and for making it possible for the back to tilt down forwards.

6. A hinge according to any one of the preceding claims, characterized in that the housing is in the form of a round slab.

7. A hinge according to any one of the preceding claims, characterized in that the control member (6) for the second mechanism is a knob disposed in the top region of the seat back (2) and connected to a pulley (6₁) secured to the corresponding cam (20) by means of an inextensible cable housed in a sheath (7).

## Patentansprüche

1. Gelenk für einen Autositz, das einen ersten Flansch (8) umfaßt, der fest mit dem Gestell (1) der Rückenlehne (2) des Sitzes verbunden werden kann, einen zweiten Flansch (9), der fest mit dem Gestell (3) der Sitzfläche (4) dieses Sitzes verbunden werden kann und mit dem ersten Flansch einen Kasten bildet, einen innen gezahnten Ring (11), der mit dem ersten Flansch verbunden ist, in dem Kasten angeordnet ist und als Achse die Horizontalachse (X) des Gelenks annimmt, eine Betätigungsvorrichtung (5), die für den Benutzer des Sitzes zugänglich ist, sowie einen im Inneren des Kastens liegenden Mechanismus (M), der mittels dieser Vorrichtung bedient werden kann und mit der Zahnung (12) des Rings zusammenwirkt, um die Drehungen der Vorrichtung in Winkelbewegungen des ersten Flansches und also der Rückenlehne des Sitzes oder in ein Zulassen oder Verhindern solcher Winkelbewegungen umzuwandeln, dadurch gekennzeichnet, daß der gezahnte Ring (11) frei drehbar bezüglich dem ersten Flansch (8) montiert ist, und daß das Gelenk außerdem einerseits einen zweiten im Inneren des Kastens angeordneten Mechanismus umfaßt, der geeignet ist, den gezahnten Ring (11) und den ersten Flansch (8) hinsichtlich ihrer Winkelbewegungen um die Achse (X) reversibel miteinander zu verbinden, welcher Mechanismus zwei Stopper (16₃, 18) umfaßt, die winklig fest jeweils mit dem gezahnten Ring (11) bzw. dem ersten Flansch (8) verbunden und geeignet sind, durch ihr gegenseitiges winkliges Andrücken für die voreingestellte, von dem ersten Flansch zu Beginn jeder Abkopplung eingenommene Position diese Position zu speichern, und andererseits eine zweite Betätigungsvorrichtung (6) für diesen zweiten Mechanismus, der von der Hinterseite der Rückenlehne her leicht zugänglich ist.

2. Gelenk nach Anspruch 1, dadurch gekennzeichnet, daß der zweite Mechanismus eine quer angeordnete Scheibe (15) umfaßt, die fest mit dem gezahnten Ring (11) verbunden ist und einen Schlitz (16) aufweist, der ein Radialteilstück (16₁) aufweist, das an seinem der Achse (X) am nächsten gelegenen Ende mit einem kreisbogenförmigen Teilstück (16₂) verbunden ist, das auf die Achse (X) zentriert ist, ein außen gezahntes Paßstück (17), das so montiert ist, daß es in einer Radialführung gleiten kann, in dem ersten Flansch (8) enthalten ist, wobei das Paßstück einen Zapfen (18) umfaßt, der an den Enden der Führung in dem Spalt (16) der Scheibe angeordnet und geeignet ist, mit einer zweiten, inneren Zahnung (19) zusammenzuwirken, welche der gezahnte Ring (11) für seine radial von der Achse (X) am weitesten entfernteste Position aufweist, wobei ein Nocken (20) zur Steuerung der Bewegungen des Paßstücks (17) mit der zweiten Betätigungsvorrichtung (6) verbunden ist, sowie eine Feder, die diesen Nocken ständig in Richtung auf seine Winkelposition zieht, für die sie das gezahnte Paßstück in Richtung auf seine von der Achse (X) am weitesten entfernte Position zieht.

3. Gelenk nach Anspruch 2, dadurch gekennzeichnet, daß die Anzahl der Spalte (16), die in der quer angeordneten Scheibe (15) vorgesehen sind, gleich 3 ist, wobei diese Spalten miteinander identisch und winklig um 120° um die Achse (X) versetzt sind, sowie dadurch, daß der zweite Mechanismus drei gezahnte Paßstücke (17) umfaßt, deren Nocken jeweils in den drei Spalten (16) angeordnet sind.

4. Gelenk nach Anspruch 2, dadurch gekennzeichnet, daß das radiale Teilstück (16₁) des Spaltes (16) mit dem halbkreisförmigen Teilstück (16₂) dieses Spalts an einem Zwischenpunkt dieses letzteren Teilstücks verbunden ist.

5. Gelenk nach einem der vorstehenden Ansprüche, dadurch gekennzeichnet, daS die quer angeordnete Scheibe (15) im wesentlichen in der Mitte der Axialstärke des von den beiden Flanschen (8, 9) gebildeten Kastens zwischen den beiden Mechanismen angeordnet ist, die zur Einstellung der Neigung der Rückenlehne (2) bzw. zur Ermöglichung des Schwenkens dieser Rückenlehne nach vorne bestimmt sind.

6. Gelenk nach einem der vorstehenden Ansprüche, dadurch gekennzeichnet, daß der Kasten in Form einer runden Flachspule vorgesehen ist.

7. Gelenk nach einem der vorstehenden Ansprüche, dadurch gekennzeichnet, daß die Betätigungsvorrichtung (6) des zweiten Mechanismus ein Bedienungsgriff ist, der im oberen Bereich der Rückenlehne (2) des Sitzes angeordnet und mit einer Scheibe (6₁) verbunden ist, die mittels eines unter einer Hülse befindlichen unausdehnbaren Kabels fest mit dem entsprechenden Nocken (20) verbunden ist.
